# EUROPEAN PATENT SPECIFICATION

(11) **EP 1 259 552 B1**
(45) Date of publication and mention of the grant of the patent: **28.04.2004**
(21) Application number: 00965676.0
(22) Date of filing: 06.10.2000
(51) Int. Cl.: C08F 8/50, C08J 5/18, A22C 13/00

(54) **USE OF MODIFIED LINEAR LOW DENSITY POLYETHYLENE IN SHRINK FILMS AND SHRINK FILMS**
VERWENDUNG VON MODIFIZIERTEM LINEAREM POLYETHYLEN NIEDRIGER DICHTE ZU SCHRUMPFFOLIEN UND SCHRUMPFFOLIEN
UTILISATION DE POLYETHYLENE BASSE DENSITE LINEAIRE MODIFIE DANS DES FILMS RETRECISSABLES, ET FILMS RETRECISSABLES

(30) Priority: 21.12.1999 BR 9906086
(43) Date of publication of application: 27.11.2002
(73) Proprietor: OPP Quimica S.A., 42800-000 Camaçari (BR)
(72) Inventor: CASSINELLI, Luis, Fernando, CEP-04514-030 Sao Paulo, SP (BR); DA SILVA, Alexandre, Elias, Leme, CEP-09230-630 Santo André (BR)
(74) Representative: Evans, Marc Nigel
(86) International application number: PCT/BR2000/000111
(87) International publication number: WO 2001/046269

(56) References cited:
- EP-A- 0 069 603
- EP-A- 0 322 196
- EP-A- 0 404 368
- EP-A- 0 589 436
- WO-A-85/04664
- FR-A- 1 161 148
- US-A- 5 756 203
- US-A- 5 962 598

## Description

### FIELD OF THE INVENTION

The present invention relates to the use of modified linear low-density polyethylene (LLDPE) in thermoshrinking films. More specifically, the present invention relates to the use of LLDPE in thermoshrinking films, either isolated or in blends with low density polyethylene (LDPE), where the amount of LLDPE is at least 50% w/w, the LLDPE being modified with a free radical generator.

### BACKGROUND OF THE INVENTION

Shrink wrapping has been largely employed as films on packing and to group a set of various volumes, so as to ease transport, improving aesthetics and protecting the packed products. A classical example of the use of said packing is the replacement of the soft drinks high density polyethylene (HDPE) rails by thermoshrinking films. Basically the process comprises packing the product and submitting it to heating (usually in oven or with the aid of a hot air pistol), whereby the film dimensions are reduced, so as to render the packing tight and suitable to its end use.

Films directed to such end use are made by extrusion of blown films, a molten tube being extruded usually upwards using drawing rolls placed of from 2 to 10 meters from the die. Upon air injection through the interior of the tube, a bubble is formed; the injected air expands the bubble diameter between 1.5 to 5 times the original diameter, causing the film to be molecularly oriented in the cross direction, while at the same time the film is molecularly oriented in the machine direction by using a higher speed of the drawing rolls relative to the extrusion speed.

The more widely used product for this kind of packing is high pressure polyethylene (LDPE). The LDPE structure contains a large amount of long chain branches; during the quick cooling step of the film the mobility of such chains is low, preventing relaxation, ensuing concentration of internal stress between chains during the formation of the film. Such stress is relaxed when the film is exposed to high temperatures, resulting to film shrinkage.

In spite of a significant production volume, products such as LLDPE are not suitable for use in shrink films since their chains are mainly linear, which means easier relaxation. This causes a limitation in the cross direction, in which this kind of product shows no contraction at all, with the occurrence of even an increase in the original dimensions, this rendering impracticable the desired end use.

Normally, in order to improve mechanical properties as well as sealability, low levels of LLDPE are employed in blends with LDPE in the described use, however the contents in LLDPE are kept around 40%, since beyond this limit the use is prevented by the reduction in shrinkage.

The advantages of LLDPE relative to LDPE are multiple: mechanical properties such as tensile strength, elongation at break and puncture resistance, besides the well-known sealability advantage.

Another advantageous feature of LLDPE is the improved drawdown ability.

On the contrary, in LDPE, the presence of highly branched chains is responsible for the adequate bubble stability formed in the extrusion of these products, but may restrict the ability of quick deformation of the melt, so that the manufacture of thin films may be impaired.

That is why the combined use of these two resins is very common as blends directed to the use of films aiming at obtaining a product having the above-mentioned balanced properties.

The patent literature teaches various uses of polyethylene films.

US patent 4,460,750 teaches a process for the thermomechanical treatment of LLDPE copolymers, in the melt, in the presence of organic peroxides. This patent teaches that the peroxide treatment at temperatures lower than 220°C improves the LLDPE transparency. This patent is directed to the improvement of transparency and processability of films, and is not concerned with the preparation of a shrink film.

Aiming at improving the polymer melt strength, US patent 4,578,431 teaches a process for treating an ethylene copolymer or a high-density ethylene homopolymer prepared in the melt at a temperature between 230°C and 340°C in the presence of an organic peroxide. The preparation of shrink films is not mentioned.

US patent 4,597,920 describes a shrink film having high optical clearness, good shrink properties and good mechanical properties that is obtained by the biaxial stretching of a polyethylene film containing at least one α-olefin having mandatory of between 8 and 18 carbon atoms, and which has not been submitted to crosslinking. This use is directed to a bioriented film to be used in shrink films. Contrary to this patent, in the present application the shrink film is obtained through the process of film extrusion itself, without the need to submit the film to a biaxial stretching.

EP patent 299,750 B1 discloses a mono- or biaxially stretched film mainly made up of a polyethylene and able to be made into a thinner film than is normally possible with the well-known kinds of those films. In spite of the fact that the film is extremely thin, it has excellent impact strength, stiffness, tensile strength and tear strength. In this patent, the peroxide addition is made exclusively on the mixture of LLDPE and LDPE while in the present application the peroxide addition is preferably made on the LLDPE and optionally the free radical generator may be directly added to the LLDPE and LDPE blend or yet it may be added directly to the film extrusion. Further, the process described in this patent occurs in two stages: in a first stage, the composition is extruded into a bubble so as to obtain a non stretched film, or only stretched as a consequence of the normal efforts caused by the extrusion. In a second step, the film suffers a monoaxial or biaxial stretch so as to increase the mechanical strength and improve the tear strength. In the present application there is no such second stretching step. The objectives of the said EP patent are directed to packing bags, while the present application is directed to shrink films.

EP publication 404,368 A2 teaches a composition of a film for packing articles by shrinking, the composition comprising a blend of 50 to 95 weight % of a LLDPE containing a comonomer having of from 3 to 10 carbon atoms and of 50 to 5 weight % of a LDPE obtained in high pressure reactors. This publication does not mention the use of a free radical generator for modifying the LLDPE.

US patent 5,756,203 teaches the increase in LLDPE melt strength by the addition of low peroxide levels. Those low peroxide levels cause low crosslinking levels. This allows that LLDPE is turn into film under processing conditions close to those used for high density, high molecular polyethylene and conveys to the film a higher impact strength. This patent does not consider blends and aims at the increase in melt strength, without considering shrink films.

Therefore, the state-of-the-art references, taken alone or in combination, do not disclose nor suggest the matter described and claimed in the present application.

Thus, the technique still seeks uses for LLDPE, alone or in blends with LDPE, in amounts of at least 50% w/w, modified by free radical generator, in shrink films, as is described and claimed in the present application.

### SUMMARY OF THE INVENTION

The present invention relates to the use of LLDPE in shrink films, isolated or in blends with LDPE where the amount of LLDPE in the blend is at least 50% w/w, the resins being modified with free radical generator.

The use of LLDPE isolated or in blends in shrink films according to the invention comprises:
- Submitting the LLDPE to a thermomechanical treatment in the presence of a free radical generator, so as to obtain the modified LLDPE;
- Extrusion molding the modified LLDPE obtained, so as to produce a shrink film;
- Applying the shrink film so produced on the volumes to be contained by the film, and heating to obtain the ready shrink film.

The use of the present invention makes possible to produce films having at least 50% w/w of LLDPE in their composition, such films meeting with the shrinkage requirements of the use of shrink films associated to the already mentioned advantages of LLDPE relative to LDPE.

Thus, the present invention provides a use of LLDPE modified by a free radical generator, the LLDPE being used in shrink films, isolated or in blends with LDPE where the amount of LLDPE is at least 50% w/w of the blend.

The present invention provides further shrink films obtained from the modified LLDPE, isolated or in blends with LDPE, where the amount of LLDPE in the blend is at least 50% w/w.

The present invention provides further shrink films having superior mechanical and sealing characteristics, such as puncture and tensile strength and elongation at break.

The present invention provides further shrink films of reduced thickness.

### DETAILED DESCRIPTION OF THE PREFERRED EMBODIMENTS

The use according to the invention is based on LLDPE, that is a copolymer of ethylene and one or more α-olefin of from 3 to 12 carbon atoms, linear or branched, containing around 4 and 20% w/w of this (these) α-olefin (s), isolated or combined in any amount, that is (are) preferably selected among propylene, 1-butene, 4-methyl-1-pentene, 1-hexene and 1-octene, having density (measured according to ASTM Method D-1501) between 0.900 and 0.940, preferably between 0.915 and 0.925, and melt flow index (measured according to ASTM Method D-1238 condition 190°C/2.16 kg) between 0.3 to 40 g/10 min, preferably between 1 and 10 g/10 min, produced by low pressure polymerisation in the presence of a transition metal /aluminium alkyl catalyst.

The modified LLDPE to be applied in the use of the invention is obtained by reaction with a free radical generator. This free radical generator is not critical and may be for example heat, high frequency radiation, organic peroxides, azo compounds, organic peracids, compounds having at least two quaternary vicinal carbon atoms, isolated or combined in any amount.

For the purposes of the present invention the organic peroxides include the typical compounds: benzoyl peroxide; dichlorobenzoyl peroxide; dicumyl peroxide; di-t-butyl peroxide; 2,5-dimethyl 3-hexyne 2,5-diperoxybenzoate; 1,3-di (t-butyl peroxy) diisopropyl benzene; lauroyl peroxide; t-butyl peracetate; 2,5-dimetyl-3-hexyne 2,5-diperoxy-t-butylate; 2,5-dimetyl hexane 2,5-diperoxy-t-butylate and t-butyl perbenzoate. Typical azo compounds include aza-isobutyronitrile and dimethyl-aza-diisobutyrate, which show insignificant decomposition level at temperatures below 100°C and half life period lower than 1 minute at the temperatures usually employed for processing LLDPE (120-280°C).

The content of free radical generator varies of from 0.005 to 1- % w/w based on the weight of LLDPE. Preferably the content of free radical generator varies between 0.01 to 0.1% w/w based on the weight of LLDPE. Preferably the organic peroxide used as free radical generator in the present invention is selected between 1,3-di (t-butyl peroxi) diisopropyl benzene, 2,5-dimethyl hexane 2,5-diperoxi-t-butylate and dicumyl peroxide.

The peroxide-modified LLDPE is prepared through a thermomechanical treatment, which comprises homogeneously mixing the polyethylene with a free radical generator. In the present application the peroxide addition is preferably effected on the LLDPE and optionally the free radical generator may be directly added to the blend of LLDPE and LDPE or still directly to the film extrusion. The mixture with the free radical generator occurs at a temperature where the decomposition of the free radical generator is negligible. After this first mixture the product is made to melt in an extruder and the temperature is raised to the range between 120-280°C, preferably in the range 180-250°C, where the half life period of the free radical generator is generally rather low, whereby the initial product is modified.

Alternatively, the initial mixture step may be effected in the extruder itself.

The modification introduced in the LLDPE may be evidenced and quantified by measuring the reduction in the melt flow index.

As relates to the modified product, besides meeting the requisites for complying with the needs of the use in shrink film, some other advantages mentioned before were confirmed, such as the improvement in the processability of LLDPE caused by an increase in its pseudoplasticity that makes possible to process it in equipment projected for the processing of LDPE as described in US patent 4,460,750; as well as the increase in melt strength for the LLDPE as described in US patent 4,578,431.

LDPE is a commercial product obtained by polymerising ethylene under high pressure and temperature in the presence of free-radical initiators. Density is around 0.912 and 0.935. Number and weight molecular weight ratios are typically in the range of 20 to 50.

According to the use of the invention in shrink films, the modified LLDPE may be used isolated or in an amount of at least 50 % w/w in blends with LDPE.

The desired balance of properties for each application, besides economical considerations determines the ideal amount of LLDPE.

The properties of the shrink film obtained after the thermal treatment of LLDPE isolated or blended are a function of the amount of LLDPE in the blend. Thus, features of better sealability, puncture resistance and tensile strength and elongation at break linked to LLDPE will be conveyed to the end product, the shrink film.

As a consequence of the higher strength caused by LLDPE, it will be possible to make a thinner, shrink film having the same mechanical properties, this leading to a significant cost reduction.

The Examples below should not be construed as limiting the invention.

### EXAMPLES

A commercial LLDPE of specific weight 0.918 was mixed with different contents of the 1,3-di (t-butyl peroxi) diisopropyl benzene peroxide. Initially the LLDPE and the peroxide were homogenised at ambient temperature through physical blending, the blend being then palletised in a palletising extruder at a temperature of 220°C. After the pelletisation the melt index (MI) of the product aiming at evaluating the effectiveness of the peroxide incorporation was determined.

TABLE 1 below evidences the modification of the molecular structure of the LLDPE polymer through reaction with the peroxide.

**TABLE 1**

| Peroxide, ppm | MI (g/10 min) |
|---|---|
| 0 | 2.0 |
| 320 | 0.91 |
| 400 | 0.67 |
| 401 | 0.53 |

In order to check the shrinkage behaviour of the films, films from the products having the peroxide incorporated were processed after pelletisation. Film extrusion was only run for the samples having 320 and 480-ppm peroxide identified respectively as 2A and 2B in TABLE 2 below.

As comparative standard a mixture usually used for the shrink application was employed, said mixture being a blend of 80% w/w of LDPE having MI 0.28 with 20 % w/w LLDPE having MI 0.55, said mixture being identified as 2C in TABLE 2; while to check the advantages of the invention a LLDPE identified as 2D in TABLE 2 was used, which is not modified with a free radical generator and having MI similar to the final MI of sample 2B. LLDPE-rich samples 2A, 2B and 2D, were processed with 20% w/w LDPE.

TABLE 2 below illustrates the shrinkage test results in the machine direction (MD) and in the cross direction (CD) for the standard, for the non-modified LLDPE and for LLDPE prepared according to the present invention. Figures measured for tensile strength and elongation at break are also presented.

In order to determine the shrinkage percentage in the MD and CD directions, five circular samples of 50 mm diameter were submitted to a temperature of 150°C during one minute in a Hanatek Film "Free Shrink" tester, and the shrinkage in each direction was determined. In order to determine the values measured for tensile strength and elongation at break the method described in ASTM Method D-882 was used.

**TABLE 2**

| SAMPLE | Shrinkage (%) | | Tensile Strength (MPa) | | Elongation at Break (%) | |
|---|---|---|---|---|---|---|
| | MD | CD | MD | CD | MD | CD |
| 2A | 66 | 9 | nd² | nd² | nd² | nd² |
| 2B | 70 | 18 | 33 | 30 | 1224 | 1545 |
| 2C | 77 | 25 | 28 | 29 | 492 | 1239 |
| 2D | 76 | 0¹ | 35 | 36 | 1178 | 1524 |

| | | | | | | |
|---|---|---|---|---|---|---|
| ¹ the dimension increased | | | | | | |
| ² Non determined | | | | | | |

The advantages found for the shrinking in the cross direction for peroxide-modified LLDPE (2A and 2B) relative to the non-modified LLDPE are an evidence of the excellence of the method for increasing the shrinking in the cross direction, this being the main drawback for the use of LLDPE in shrink films. It was also found that the increase in shrinkage caused by the modification with the free radical generator increases with the increase in concentration of the free radical generator, this being seen from Examples 2A and 2B.

In spite of the difference found between the figure for shrinkage of the peroxide-modified LLDPE film (2A and 2B) and the control (2C), practical tests made with end consumers demonstrated that the obtained shrinkage level makes already possible to use the inventive modified LLDPE in shrink films.

The mechanical properties of the films obtained in examples 2B and 2D were shown to be very similar, which indicates that no significant loss of these properties was verified as a result of the modification of LLDPE with the free radical generator. The better performance of the free radical generator-modified LLDPE (2B) relative to the LDPE (2C) was also evidenced.

The example with the non-modified LLDPE (2D) shows results that are different from those disclosed in EP Patent 404.368 A2 since when using the non-modified LLDPE its dimensions were increased.

A commercial LLDPE of specific weight 0.918 was blended to LDPE in the amount of 20% w/w LDPE and this blend was further homogenised and 320 ppm of 1,3-di (t-butyl peroxi) diisopropyl benzene peroxide were added at ambient temperature by physical mixing (blending). The obtained blend was palletised in a palletising extruder at a temperature of 220°C. After palletising, a film was processed, which is identified as 3A in TABLE 3 below. The film was then submitted to the shrinkage test listed in TABLE 3.

**TABLE 3**

| Identification | Shrinkage (MD) (%) | Shrinkage (CD) (%) |
|---|---|---|
| 3A | 67 | 11 |

## Claims

1. Use of modified linear low density polyethylene (LLDPE) in shrink films, wherein said use comprises:
• Submitting the LLDPE to a thermomechanical treatment in the presence of a free radical generator so as to obtain the modified LLDPE;
• Extrusion-molding the so-obtained modified LLDPE, so as to obtain a shrink film;
• Applying the so-obtained shrink film on the volumes to be assembled with the aid of the film, and heating the film to obtain the shrink film ready.

2. Use according to claim 1, wherein the LLDPE to be submitted to the said thermomechanical treatment is blended with up to 50% w/w LDPE.

3. Use according to claim 1, wherein the modified LLDPE forms a blend with LDPE.

4. Use according to claim 3, wherein the blend comprises at least 50% w/w LLDPE.

5. Use according to any preceding claim, wherein the LLDPE is a copolymer of ethylene with one or more linear or branched α-olefins having of from 3 to 12 carbon atoms, containing between 4 and 20 % w/w of such α-olefin(s), isolated or combined in any amount, having specific weight between 0.900 and 0.940 and melt index between 0.3 and 40 g/10 min, obtained by low pressure polymerisation in the presence of a transition metal /aluminium alkyl catalyst.

6. Use according to claim 5, wherein the α-olefins are selected among propylene, 1-butene, 4-methyl-1-pentene, 1-hexene and 1-octene.

7. Use according to any preceding claim, wherein the density of LLDPE is between 0.915 and 0.925 and the melt index is between 1 and 10 g/10 min.

8. Use according to any preceding claim, wherein the free radical generator comprises heat, high-frequency radiation, organic peroxides, azo compounds, organic peracids, and compounds having at least two quaternary vicinal carbons, isolated or combined in any amount.

9. Use according to claim 8, wherein the organic peroxide comprises benzoyl peroxide; dichlorobenzoyl peroxide; dicumyl peroxide; di-t-butyl peroxide; 2,5-dimethyl 3-hexyne 2,5-diperoxybenzoate; 1,3-di (t-butyl peroxy) diisopropyl benzene; lauroyl peroxide; t-butyl peracetate; 2,5-dimetyl-3- hexyne 2,5-diperoxy-t-butylate; 2,5-dimetyl hexane 2,5-diperoxy-t-butylate and t-butyl perbenzoate.

10. Use according to 9, wherein preferably the peroxide is selected among 1,3-di (t-butyl peroxy) diisopropyl benzene, 2,5-dimetyl hexane 2,5-diperoxy-t-butylate and dicumyl peroxide.

11. Use according to any one of claims 8-10, wherein the azo compound comprises aza-isobutyro nitrile and dimethyl aza-diisobutyrate.

12. Use according to any preceding claim, wherein the concentration of the free radical generator is between 0.005 until 1 % w/w based on the weight of LLDPE.

13. Use according to claim 12, wherein the concentration of the free radical generator is between 0.01 until 0.1 % w/w based on the weight of LLDPE.

14. Use according to any preceding claim, wherein the thermomechanical treatment to which the LLDPE is submitted comprises homogeneously blending the LLDPE with the free radical generator at a temperature where the decomposition of the radical generator is negligible, melting the blend in a thermomechanical mixing equipment and increasing the temperature to the 120-280°C range in order to cause the decomposition of the free radical compound and modification of the LLDPE.

15. Use according to claim 14, wherein the thermomechanical treatment is effected in an extruder at a temperature between 180-250°C.

16. Use according to any preceding claim, wherein the modified LLDPE is extrusion-moulded for obtaining a shrink film.

17. Use according to any preceding claim, wherein the shrink film is used to pack volumes to be assembled in single packing that on heating shrinks in in order to yield the ready shrink film.

18. Shrink films based on modified LLDPE prepared according to any preceding claim.

## Patentansprüche

1. Verwendung eines modifizierten linearen Polyethylens niedriger Dichte (LLDPE = linear low density polyethylene) in Schrumpffolien, wobei die Verwendung umfasst:
- Unterwerfen des LLDPE unter eine thermomechanische Behandlung in Anwesenheit eines freien Radikalgenerators, um das modifizierte LLDPE zu erhalten;
- Strangpressen des so erhaltenen modifizierten LLDPE, um eine Schrumpffolie zu erhalten;
- Aufbringen der so erhaltenen Schrumpffolie auf die mit Hilfe der Folie zusammenzusetzenden Volumina und Erwärmen der Folie, um die fertige Schrumpffolie zu erhalten.

2. Verwendung gemäß Anspruch 1, worin das der thermomechanischen Behandlung zu unterwerfende LLDPE mit bis zu 50 % (Gewicht/Gewicht) LDPE gemischt wird.

3. Verwendung gemäß Anspruch 1, worin das modifizierte LLDPE eine Mischung mit LDPE bildet.

4. Verwendung gemäß Anspruch 3, worin die Mischung mindestens 50 % (Gewicht/Gewicht) LLDPE umfasst.

5. Verwendung gemäß einem der vorstehenden Ansprüche, worin das LLDPE ein Copolymer von Ethylen mit einem oder mehreren linearen oder verzweigten α-Olefinen mit 3 bis 12 Kohlenstoffatomen, enthaltend zwischen 4 und 20 % (Gewicht/Gewicht) an α-Olefin(en), isoliert oder kombiniert in jeder Menge, mit einem spezifischen Gewicht zwischen 0,900 und 0,940 und einem Schmelzindex zwischen 0,3 und 40 g/10 min. darstellt, erhalten durch Niederdruckpolymerisation in Anwesenheit eines Übergangsmetalls/Aluminiumalkyl-Katalysators.

6. Verwendung gemäß Anspruch 5, worin die α-Olefine ausgewählt sind unter Propylen, 1-Buten, 4-Methyl-1-penten, 1-Hexen und 1-Octen.

7. Verwendung nach einem der vorstehenden Ansprüche, worin die Dichte des LLDPE zwischen 0,915 und 0,925 und der Schmelzindex zwischen 1 und 10 g/10 min. liegt.

8. Verwendung nach einem der vorstehenden Ansprüche, worin der freie Radikalgenerator Wärme, Hochfrequenzstrahlung, organische Peroxide, Azoverbindungen, organische Persäuren und Verbindungen mit mindestens zwei quarternären vicinalen Kohlenstoffen umfasst, isoliert oder kombiniert in jeder Menge.

9. Verwendung gemäß Anspruch 8, worin das organische Peroxid umfasst Benzoylperoxid, Dichlorbenzoylperoxid, Dicumylperoxid, Di-t-butylperoxid, 2,5-Dimethyl-3-hexyn-2,5-diperoxybenzoat; 1,3-Di-(t-butylperoxy)-diisopropylbenzol, Laurylperoxid, t-Butylperacetat, 2,5-Dimethyl-3-hexyn-2,5-diperoxy-t-butylat, 2,5-Dimethyl-hexan-2,5-diperoxy-t-butylat und t-Butylperbenzoat.

10. Verwendung gemäß Anspruch 9, worin vorzugsweise das Peroxid ausgewählt ist unter 1,3-Di-(t-butylperoxy)-diisopropylbenzol, 2,5-Dimethyl-hexan-2,5-diperoxy-t-butylat und Dicumylperoxid.

11. Verwendung gemäß einem der Ansprüche 8 bis 10, worin die Azoverbindung Aza-isobutyronitril und Dimethyl-aza-diisobutyrat umfasst.

12. Verwendung gemäß einem der vorstehenden Ansprüche, worin die Konzentration des freien Radikalgenerators zwischen 0,005 bis 1 % (Gewicht/Gewicht) liegt, basierend auf dem Gewicht des LLDPE.

13. Verwendung gemäß Anspruch 12, worin die Konzentration des freien Radikalgenerators zwischen 0,01 bis 0,1 % (Gewicht/Gewicht) liegt, basierend auf dem Gewicht des LLDPE.

14. Verwendung nach einem der vorstehenden Ansprüche, worin die thermomechanische Behandlung, unter die das LLDPE unterworfen wird, das homogene Mischen des LLDPE mit dem freien Radikalgenerator bei einer Temperatur, bei der die Zersetzung des Radikalgenerators vernachlässigbar ist, das Schmelzen der Mischung in einer thermomechanischen Mischvorrichtung und das Erhöhen der Temperatur auf den Bereich von 120-284°C umfasst, um die Zersetzung der freiradikalischen Verbindung und die Modifizierung des LLDPE zu verursachen.

15. Verwendung gemäß Anspruch 14, worin die thermomechanische Behandlung in einem Extruder bei einer Temperatur zwischen 180-250°C bewirkt wird.

16. Verwendung nach einem der vorstehenden Ansprüche, worin das modifizierte LLDPE zum Erhalt einer Schrumpffolie stranggegossen wird.

17. Verwendung nach einem der vorstehenden Ansprüche, worin die Schrumpffolie zum Packen von Volumina, die in einer einzelnen Verpackung zusammengesetzt werden sollen, die beim Erwärmen zum Erhalt der fertigen Schrumpffolie schrumpft, verwendet wird.

18. Schrumpffolie auf Basis von modifiziertem LLDPE, hergestellt gemäß einem der vorstehenden Ansprüche.

## Revendications

1. Utilisation d'un polyéthylène linéaire basse densité (PELBD) modifié dans des films rétractables, ladite utilisation comprenant les étapes consistant :
• à soumettre le PELBD à un traitement thermomécanique en présence d'un agent engendrant des radicaux libres de manière à obtenir le PELBD modifié ;
• à mouler par extrusion le PELBD modifié ainsi obtenu de manière à obtenir un film rétractable ;
• à appliquer le film rétractable ainsi obtenu sur les volumes à assembler au moyen du film, et à chauffer le film pour obtenir le film rétracté prêt.

2. Utilisation suivant la revendication 1, dans laquelle le PELBD à soumettre audit traitement thermomécanique est mélangé à une quantité allant jusqu'à 50% en poids/poids de PELBD.

3. Utilisation suivant la revendication 1, dans laquelle le PELBD modifié forme un mélange avec du PEBD.

4. Utilisation suivant la revendication 3, dans laquelle le mélange comprend au moins 50% en poids/poids de PELBD.

5. Utilisation suivant l'une quelconque des revendications précédentes, dans laquelle le PELBD est un copolymère d'éthylène avec une ou plusieurs α-oléfines linéaires ou ramifiées ayant 3 à 12 atomes de carbone, contenant 4 à 20% en poids/poids de ladite ou lesdites α-oléfines, isolées ou combinées en n'importe quelles quantités, ayant un poids spécifique compris dans l'intervalle de 0,900 à 0,940 et un indice de fluidité compris dans l'intervalle de 0,3 à 40 g/10 mn, obtenu par polymérisation sous basse pression en présence d'un catalyseur à base d'un métal de transition/alkyl-aluminium.

6. Utilisation suivant la revendication 5, dans laquelle les α-oléfines sont choisies entre le propylène, le 1-butène, le 4-méthyl-1-pentène, le 1-hexène et le 1-octène.

7. Utilisation suivant l'une quelconque des revendications précédentes, dans laquelle la densité du PELBD est comprise dans l'intervalle de 0,915 à 0,925 et l'indice de fluidité est compris dans l'intervalle de 1 à 10 g/10 mn.

8. Utilisation suivant l'une quelconque des revendications précédentes, dans laquelle l'agent engendrant des radicaux libres comprend la chaleur, un rayonnement haute fréquence, des peroxydes organiques, des composés azoïques, des peracides organiques et des composés ayant au moins deux atomes de carbone quaternaires vicinaux, isolés ou combinés en n'importe quelle quantité.

9. Utilisation suivant la revendication 8, dans laquelle le peroxyde organique comprend le peroxyde de benzoyle, le peroxyde de dichlorobenzoyle, le peroxyde de dicumyle, le peroxyde de di-tertiobutyle, le 2,5-diperoxybenzoate de 2,5-diméthyl-3-hexyne ; le 1,3-di(tertiobutylperoxy)diisopropylbenzène ; le peroxyde de lauroyle ; le peracétate de tertiobutyle ; le 2,5-diperoxy-tertiobutylate de 2,5-diméthyl-3-hexyne, le 2,5-diperoxy-tertiobutylate de 2,5-diméthyl-hexane et le perbenzoate de tertiobutyle.

10. Utilisation suivant la revendication 9, dans laquelle le peroxyde est choisi de préférence entre le 1,3-di(tertiobutylperoxy)diisopropylbenzène, le 2,5-diperoxy-tertiobutylate de 2,5-diméthylhexane et le peroxyde de dicumyle.

11. Utilisation suivant l'une quelconque des revendications 8 à 10, dans laquelle le composé azoïque comprend l'aza-isobutyronitrile et l'azadiisobutyrate de diméthyle.

12. Utilisation suivant l'une quelconque des revendications précédentes, dans laquelle la concentration de l'agent engendrant des radicaux libres est comprise dans l'intervalle de 0,005 jusqu'à 1% en poids/poids sur la base du poids du PELBD.

13. Utilisation suivant la revendication 12, dans laquelle la concentration de l'agent engendrant des radicaux libres est comprise dans l'intervalle de 0,01 jusqu'à 0,1% en poids/poids sur la base du poids du PELBD.

14. Utilisation suivant l'une quelconque des revendications précédentes, dans laquelle le traitement thermomécanique auquel le PELBD est soumis comprend le mélange homogène du PELBD à l'agent engendrant des radicaux libres à une température à laquelle la décomposition de l'agent engendrant des radicaux est négligeable, la fusion du mélange dans un dispositif de mélange thermomécanique et l'élévation de la température dans la plage de 120 à 280°C afin de provoquer la décomposition du composé radicalaire et la modification du PELBD.

15. Utilisation suivant la revendication 14, dans laquelle le traitement thermomécanique est effectué dans une extrudeuse à une température comprise dans l'intervalle de 180 à 250°C.

16. Utilisation suivant l'une quelconque des revendications précédentes, dans laquelle le PELBD modifié est moulé par extrusion pour obtenir un film rétractable.

17. Utilisation suivant l'une quelconque des revendications précédentes, dans laquelle le film rétractable est utilisé pour emballer des volumes à assembler en un seul emballage, qui, par chauffage, se rétracte afin d'obtenir le film rétracté prêt.

18. Films rétractables à base de PELBD modifié préparés suivant l'une quelconque des revendications précédentes.
